# EUROPEAN PATENT SPECIFICATION

(11) **EP 3 276 708 B1**
(45) Date of publication and mention of the grant of the patent: **22.07.2020**
(21) Application number: 16771870.9
(22) Date of filing: 01.02.2016
(51) Int. Cl.: H01M 4/134, H01M 4/36, H01M 4/38, H01M 4/62, H01M 4/66, H01M 10/052, H01M 4/02

(54) **LITHIUM ION BATTERY NEGATIVE ELECTRODE AND LITHIUM ION BATTERY**
NEGATIVELEKTRODE FÜR LITHIUM-IONEN BATTERIEN SOWIE LITHIUM-IONEN-BATTERIE
ÉLECTRODE NÉGATIVE DE BATTERIE LITHIUM-ION ET BATTERIE LITHIUM-ION

(30) Priority: 27.03.2015 JP 2015066466
(43) Date of publication of application: 31.01.2018
(73) Proprietor: National Institute of Advanced Industrial Science and Technology, Tokyo 100-8921 (JP)
(72) Inventor: Yanagida Masahiro, Ikeda-shi Osaka 563-8577 (JP); Tanaka Hideaki, Ikeda-shi Osaka 563-8577 (JP); Sakai Tetsuo, Ikeda-shi Osaka 563-8577 (JP); Morishita Masanori, Nagaokakyo-shi Kyoto 617-8555 (JP); Kawai Toru, Nagaokakyo-shi Kyoto 617-8555 (JP)
(74) Representative: Horn Kleimann Waitzhofer Patentanwälte PartG mbB
(86) International application number: PCT/JP2016/052948
(87) International publication number: WO 2016/157986

(56) References cited:
- EP-A1- 1 777 771
- JP-A- 2001 297 757
- JP-A- 2008 210 576
- JP-A- 2013 069 681
- JP-A- 2013 197 069
- JP-A- 2014 032 909
- JP-A- 2014 038 832
- JP-A- 2014 096 311
- US-A1- 2007 269 718
- LEE Y S ET AL: "Rapidly solidified Ti-Si alloys/carbon composites as anode for Li-ion batteries", ELECTROCHIMICA ACTA, ELSEVIER SCIENCE PUBLISHERS, BARKING, GB, vol. 52, no. 4, 11 May 2006 (2006-05-11), pages 1523-1526, XP028027862, ISSN: 0013-4686, DOI: 10.1016/J.ELECTACTA.2006.02.052 [retrieved on 2006-12-01]
- YOO-SUNG LEE ET AL.: 'Rapidly solidified Ti-Si alloys/carbon composites as anode for Li-ion batteries' ELECTROCHIMICA ACTA vol. 52, 2006, pages 1523 - 1526, XP028027862

## Description

### TECHNICAL FIELD

The present invention relates to a lithium ion battery negative electrode and a lithium ion battery.

### BACKGROUND ART

While powder containing a carbon material has been conventionally used as a negative electrode active material of a lithium ion battery, the theoretical capacity of the carbon material is as low as 372 mAh/g, and there is a limit to further increase the capacity. On the other hand, in recent years, application of metallic materials having higher theoretical capacity than carbon materials, such as Sn-based, Al-based and Si-based materials, has been studied. In particular, Si is considered to have a theoretical capacity exceeding 4000 mAh/g and is considered to be a promising material. However, in the case of forming a negative electrode active material layer using Si as a negative electrode active material, Si occludes and releases Li ions inside thereof during charging and discharging, and accompanies a large volume change. Therefore, when this is repeated, falling-off of the negative electrode active material particles from the negative electrode active material layer by pulverization and peeling of the negative electrode active material layer from a current collector proceed. Therefore, there is a problem that the current collecting characteristics are lowered, and accordingly, the charge/discharge cycle characteristics are deteriorated.

In response to the above problem, a method for improving the problem by adding various elements to Si to make Si alloy powder instead of pure Si to obtain a fine structure has been proposed. For example, in Japanese Unexamined Patent Application No. 2001-297757 (Patent Document 1), an element such as Co in a eutectic or hypereutectic amount is added, and the mixture is quenched and solidified to obtain an alloy with a minor axis particle diameter of the Si phase of 5 µm or less, then the obtained alloy is crushed and used as a negative electrode active material to form a negative electrode active material layer, thereby improving the cycle life. That is, the silicide phase which does not occlude/release Li ions finely formed together with the Si phase plays a role as a cushioning material against the volume change occurring when occluding and releasing Li ions in the fine Si phase, and it is presumed that the effect of alleviating the volume change as a whole electrode is brought about, which is conceivably leading to suppression of degradation of the electrode structure. JP 2008 210576 A discloses a lithium ion battery negative electrode for use in a lithium ion battery, wherein a negative electrode active material which is a Si alloy composed of a eutectic structure of a Si phase and a Si₂Ti phase.

Further, it has been found that a negative electrode obtained by sintering a negative electrode active material layer containing an active material made of a material containing Si and a polyimide binder in a non-oxidizing atmosphere, in order to maintain the current collecting characteristics in the negative electrode, exhibits good charge/discharge cycle characteristics (see Patent Document 2 below). Further, it has been found that cycle characteristics can be further improved by changing polyimide species (see Patent Document 3 below)

### PRIOR ART DOCUMENTS

### PATENT DOCUMENTS

Patent Document 1: Japanese Unexamined Patent Publication No. 2001-297757
Patent Document 2: Japanese Unexamined Patent Publication No. 2002-260637
Patent Document 3: Japanese Unexamined Patent Publication No. 2011-204592
Patent Document 4: JP 2008 210576 A

### SUMMARY OF THE INVENTION

### PROBLEMS TO BE SOLVED BY THE INVENTION

However, from attempts to prepare an alloy containing a eutectic structure formed from the Si phase and the silicide phase with various additive elements, it has been found that a fine eutectic structure cannot necessarily be obtained depending on the type of the added element. Furthermore, it has been also found that the polyimide binder fired at high temperature has a rigid and strong molecular structure, thus cannot follow the volume change occurring when occluding and releasing Li ions in the Si phase, and the adhesion between the negative electrode members is lowered, and accordingly, satisfactory cycle characteristics cannot be obtained.

Therefore, an object of the present invention is to provide a lithium ion battery negative electrode and a lithium ion battery with high capacity and excellent cycle characteristics by properly arranging a eutectic structure composed of a fine Si phase and a silicide phase in a Si alloy to suppress destruction of the negative electrode active material particles themselves during charging and discharging, and further by suppressing peeling at the interfaces between negative electrode active materials and between the negative electrode active material and a negative electrode current collector by combined use of a polyimide binder with high binding properties. Therefore, the lithium ion battery negative electrode of the present invention can be used as a driving power source for portable equipment or the like which is expected to be used for a long time.

### MEANS FOR SOLVING THE PROBLEMS

In order to solve the problems as described above, the inventors have made intensive development and found a material having a large charge/discharge capacity and excellent cycle life as well. In order to have a large charge/discharge capacity, the Si content in the active material usually has to be high. However, Si induces volumetric expansion of up to appropriately 400% when occluding Li ions. Thus, considering that it is necessary to take measures to mitigate this expansion in order to prolong the cycle life, in addition to the reduction of the Si content in the Si alloy, it has been attempted to enclose the Si phase with the silicide phase. A first feature of the present invention is that titanium (Ti) is used as an additive element for obtaining a eutectic alloy.

The amount of additive elements necessary for obtaining the eutectic of the Si phase and the silicide phase is determined by the type of the element. For example, in the case of Ti, when the total atomic ratio of Si and Ti is 100 atomic%, the atomic ratio of Ti becomes 16.2% (that is, Si:Ti = 83.8:16.2). This can be read from a binary phase diagram of Si and Ti. In the case where a relatively large addition amount is required for obtaining the eutectic, such as Ti, the Si phase and the Si-Ti intermetallic compound phase are liable to be coarsened, and pulverization of particles accompanying repeated occlusion and release of Li ions proceeds, thus good charge/discharge characteristics cannot be obtained.

The negative electrode active material particles used in the present invention are alloys in which a Si₂Ti phase not having the reversible occlusion/release capability of Li ions forms a eutectic structure together with a Si phase in a Si phase or a Si₂Ti phase which is a parent phase. The average minor axis width of the Si₂Ti phase in the eutectic structure is preferably 1 µm or less. This is because the Si₂Ti phase finely structured to an average minor axis width of 1 µm or less functions as a cushioning material at the negative electrode, the expansion and shrinkage of the volume repeated when occluding and releasing Li ions into the Si phase are mitigated, and pulverization and peeling from the current collector can be prevented.

Also, electrostatic coupling is formed between the Si phase and the Si₂Ti phase by not only simply arranging the refined Si₂Ti phase in the parent phase, but also eutecticizing the Si₂Ti phase together with the Si phase, falling-off due to the pulverization of the negative electrode active material in the negative electrode active material layer advanced by repetition of volumetric expansion and shrinkage accompanying occluding and releasing Li ions into the Si phase and peeling of the negative electrode active material layer from the current collector are suppressed, and the rapid discharge capacity decrease accompanying the cycle caused by electrical isolation of Si is improved, thus a negative electrode suitable for a next generation power storage device in which both of the charge/discharge capacity and the cycle life are good can be obtained. In addition, examples of a method for producing an alloy material as a base of a negative electrode include an arc melting method, a liquid quenching method, a mechanical alloying method, a sputtering method, a chemical vapor deposition method, a firing method. Examples of the liquid quenching method include various atomizing methods such as a single roll quenching method, a twin roll quenching method, a gas atomizing method, a water atomizing method, and a disk atomizing method.

As to the content ratio of the Ti component in the negative electrode active material particles used in the present invention, when the total atomic ratio of Si and Ti is 100 atomic%, the atomic ratio of Ti is preferably 25% or less, and further preferably 20% or less. However, when the atomic ratio of Ti is 10% or less, the Si content increases and the volume change of Si generated during charging and discharging cannot be alleviated, so that it is preferably 10% or more. When the Ti content is 25% or more, the Si amount in the whole negative electrode becomes small and sufficient charge/discharge capacity cannot be obtained, so that it is preferably 25% or less.

The average particle diameter of the negative electrode active material particles used in the present invention is not particularly limited, and it is preferably 30 µm or less, more preferably 10 µm or less, and most preferably 5 µm or less, for performing effective sintering. The smaller the particle diameter of the negative electrode active material particles, the less uneven reaction is likely to occur, and good cycle characteristics tend to be obtained. Also, the average particle diameter of the conductive powder used in addition to the negative electrode active material layer is also not particularly limited, and it is preferably 5 µm or less, further preferably 1 µm or less, and most preferably 0.5 µm or less.

In addition, by using the negative electrode active material particles having a small average particle diameter, the absolute amount of the volume change of the negative electrode active material particles accompanying occlusion and release of Li ions in the Si phase in the charge and discharge reaction becomes small. Therefore, the absolute amount of distortion between the particles of the negative electrode active material in the electrode during the charge and discharge reaction also becomes small, and the deterioration of the current collecting characteristics in the electrode can be suppressed, thus good charge/discharge characteristics can be obtained.

It is preferable that the binder used in the present invention remains without being completely decomposed even after the heat treatment for sintering. The binder remains without being decomposed even after the heat treatment, whereby the adhesion between the negative electrode active material particles and the current collector and between the negative electrode active material particles by sintering can be enhanced. Therefore, it is possible to suppress the desorption of the negative electrode active material layer from the current collector due to the expansion and shrinkage of the volume of the negative electrode active material when Li ions are occluded and released, and thus good charge/discharge cycle characteristics can be obtained.

As the binder in the present invention, a polyimide having a three-dimensional structure which has undergone an imidization reaction and an imination reaction is used. Such a polyimide can be obtained by heat treating polyamic acid precursors, for example, at a temperature of 300°C or higher under an inert atmosphere. Examples of the polyimide include thermoplastic polyimide and thermosetting polyimide.

The polyimide obtained by heat treatment of the polyamic acid precursors in the present invention becomes a polyimide having a three-dimensional structure through an imidization reaction in which a polyamic acid undergoes dehydration condensation by heat treatment and an imination reaction (C=N bond) by reacting a ketone group in the polyimide resin and an amino group of an excessive diamine. The imidization ratio of polyimide is preferably 95% or more. The imidization ratio is expressed in units of mole percent of the polyimide formed with respect to a polyimide precursor (polyamic acid). Polyimide having an imidization ratio of 95% or more can be obtained, for example, by heat treating an N-methyl-2-pyrrolidone (NMP) solution of polyamic acid precursors at a temperature of 300°C or higher for 1 hour or more under an inert atmosphere for preventing oxidation. For example, when heat treatment is performed at 300°C, the imidization ratio becomes 95% at a heat treatment time of 1 hour, and when heat treatment is performed at 350°C, the imidization ratio becomes 100% at a heat treatment time of 1 hour. Since it is more preferable that the polyimide binder used in the present invention has a high imidization ratio, it is more preferable to perform heat treatment at 350°C for 1 hour under an inert atmosphere at which the imidization reaction of polyimide is completed. Further, a polyimide resin having a three-dimensional structure having an imine bond can be obtained by further heat treatment at a temperature of 350°C or higher for 0.5 hours or more after imidization. Here, the polyamic acid precursors are preferably polyamic acid precursors that are tetracarboxylic acid dianhydride and diamines, with all the diamines ranging from 100 to 120, based on 100 of the tetracarboxylic acid dianhydride, in a molar ratio.

The tetracarboxylic acid dianhydride of the polyamic acid precursor in the present invention is preferably an aromatic tetracarboxylic acid dianhydride, and further preferably pyromellitic anhydride, 3,3',4,4'-biphenyltetracarboxylic acid anhydride, or derivatives derived from two types of compounds are preferred. The diamines are preferably aliphatic diamines and aromatic diamines, and further preferably 4,4'-diaminodiphenyl ether, p-phenylene diamino, or derivatives derived from two types of compounds are preferred.

The polyimide binder in the present invention has a three-dimensional structure by imidization and imination, so that the mechanical strength and flexibility of the binder can be enhanced, as compared with the conventional polyimide binder comprising only of a straight chain structure. Such polyimide binder (having a three-dimensional structure) contains many imide groups in the molecule, thus can exhibit high adhesion. Also, since the imide group has high polarity, it has high adhesion to Si alloy negative electrode active material particles and a metal foil as a current collector, for example, a stainless steel foil. Furthermore, since the three-dimensional structure has a branched structure spreading in many directions, the imide groups present in the structure also spread in many directions. As a result, a large number of imide groups having a high polarity come into contact also with irregularities on the surfaces of the negative electrode active material particles and the current collector, so that high adhesion to the negative electrode active material particles and the current collector can be exhibited as a whole polyimide binder.

As the negative electrode current collector in the present invention, it is possible to use a current collector conventionally used for a lithium ion battery, but a current collector formed of stainless steel, Ni-plated steel or the like can be suitably used. These negative electrode current collectors are high in strength and do not decrease in strength even in a heat treatment at appropriately 300°C, thus can maintain their initial strength even after imidization and imination at high temperature.

In the present invention, the thickness of the negative electrode current collector is not particularly limited, and when a stainless steel foil or a Ni-plated steel plate is used as a negative electrode current collector, the thickness is preferably 15 µm or less and further preferably 10 µm or less, for achieving a high energy density of the battery.

The negative electrode current collector in the present invention is not particularly limited to a sheet shape such as the stainless steel foil or the Ni-plated steel plate described above, and various shapes can be adopted. For example, by the use of a three-dimensional substrate such as foamed metal, mesh, woven fabric, nonwoven fabric, expanded metal, or the like, a negative electrode current collector may be constituted by, for example, applying a Ni plating on the three-dimensional substrate. Since a void can be secured in the electrode by the use of a three-dimensional substrate, it is possible to alleviate the volume change caused by occlusion and release of Li ions in the negative electrode active material, whereby the mechanical strength of the electrode is improved. Therefore, disintegration of the negative electrode current collector due to the volume change occurring during charging and discharging in the Si alloy is further suppressed, and good charge/discharge characteristics can be obtained.

The lithium ion battery of the present invention includes the negative electrode. By employing the negative electrode, a lithium ion battery with high capacity and excellent cycle characteristics can be obtained.

### EFFECTS OF THE INVENTION

According to the present invention, it is possible to provide a lithium ion battery negative electrode and a lithium ion battery with high capacity and excellent cycle characteristics by suppressing peeling at the interfaces between negative electrode active materials and between the negative electrode active material and a negative electrode current collector.

### BRIEF DESCRIPTION OF THE DRAWINGS

Fig. 1 is an electron microscope image of a negative electrode active material according to the present invention.
Fig. 2 is a graph showing cycle characteristics of each of coin cells shown in Examples 1, 2, and 3, and Comparative Examples 1 and 2.

### EMBODIMENTS OF THE INVENTION

Hereinafter, a negative electrode for a lithium ion battery of the present invention, and the lithium ion battery including the negative electrode will be described.

The lithium ion battery according to the present invention includes a lithium ion battery positive electrode and a lithium ion battery negative electrode capable of occluding and releasing Li ions, and a separator between the positive electrode and the negative electrode, and is a lithium ion battery having a structure filled with an electrolyte containing Li ions in the void portion in the separator. The negative electrode active material employed in the lithium ion battery negative electrode is a Si alloy composed of a eutectic structure of a Si phase and a silicide Si₂Ti phase. Also, the binder employed in the negative electrode is a polyimide binder having having a three-dimensional structure comprising a C=N bond obtained by imidating tetracarboxylic acid dianhydride and diamines, with the total of the diamines ranging from 100 to 120, based on 100 of the tetracarboxylic acid dianhydride, in a molar ratio, and then iminating at a temperature of at least 350°C for at least 0.5 h, and the current collector (negative electrode current collector) employed in the negative electrode is a stainless steel foil or a Ni-plated steel plate.

The negative electrode active material used in the present invention is an alloy composed of a fine structure in which a Si phase and a silicide Si₂Ti phase are eutectic. The negative electrode active material layer composed of the alloy described above is unlikely to advance, for example, falling-off due to the pulverization of the negative electrode active material caused by the volume change accompanied by repeated occlusion and release of Li ions in the Si phase, and has high capacity, thus it is possible to prolong the life and increase the capacity of the lithium ion battery of the present invention composed using the alloy as the negative electrode.

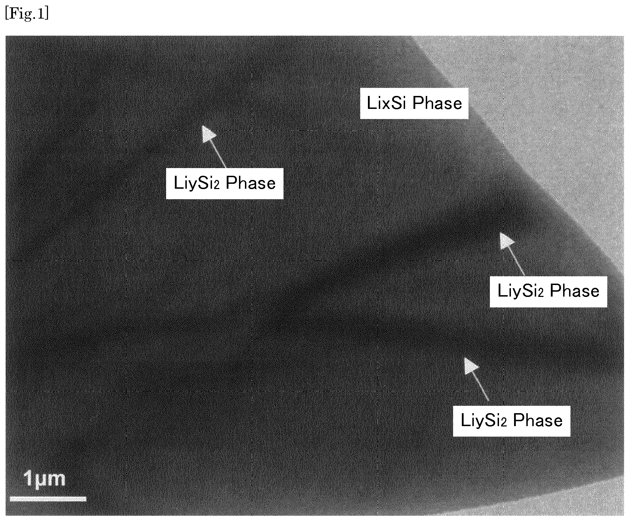

Here, when using a Si phase as a parent phase in the negative electrode active material, the average minor axis width of a contained Si₂Ti phase is preferably 1 µm or less. Also, when using a Si₂Ti phase as a parent phase in the negative electrode active material, the average minor axis width of a contained Si phase is preferably 1 µm or less. The negative electrode active material is constituted so that the Si₂Ti phase or the Si phase finely structured to an average minor axis width of 1 µm or less is dispersed in this manner, whereby it is possible to suppress the progression of falling-off due to the pulverization of the negative electrode active material caused by the volume change accompanied by charge and discharge in the Si phase, that is, repeated occlusion and release of Li ions. Also, electrostatic coupling is formed between the Si phase and the Si₂Ti phase, whereby it is possible to improve the rapid decrease in the discharge capacity due to the formation of electrical isolation by pulverization and falling-off of the negative electrode active material particles. In addition, Fig. 1 shows a transmission electron microscope image of the negative electrode active material according to the present invention. In the image shown in Fig. 1, the Si₂Ti phase having an average minor axis width of 1 µm or less is dispersed in the Si phase (parent phase).

As to the content ratio of the Ti component in the negative electrode active material used in the present invention, when the total atomic ratio of Si and Ti is 100 atomic%, the atomic ratio of Ti is preferably 10% or more and 25% or less, and further preferably 10% or more and 20% or less.

The average particle diameter of the negative electrode active material used in the present invention is preferably 30 µm or less, more preferably 10 µm or less, and most preferably 5 µm or less. As the particle diameter of the negative electrode active material is smaller, the better cycle characteristics tend to be obtained. Further, the average particle diameter of the conductive powder added to the negative electrode active material layer is preferably 5 µm or less, more preferably 1 µm or less, and most preferably 0.5 µm or less.

The negative electrode active material used in the present invention can also further contain carbon materials such as graphite, amorphous carbon, carbon nanotube, carbon nanohorn and fullerene, lithium titanate, titanium oxide, tin, tin oxide, and tin alloy.

The negative electrode active material used in the present invention contains preferably 10 wt% or more and further preferably 50 wt% or more of the alloy particles composed of a fine structure in which the Si phase and the silicide Si₂Ti phase are eutectic. When the mixing ratio of the alloy particles is 10 wt% or less, the Si content in the negative electrode active material decreases and the capacity of the whole negative electrode decreases. Therefore, the mixing ratio of the alloy particles is preferably 10 wt% or more. When the mixing ratio of the alloy particles is 50 wt% or more, the charge/discharge capacity of the whole negative electrode becomes 3 times or more the graphite which has been put to practical use and the whole negative electrode has high capacity. Therefore, the mixing ratio of the alloy particles is further preferably 50 wt% or more.

In addition, it is preferable that the negative electrode active material used in the present invention contains a compound represented by a LixSi phase (0 ≤ x ≤ 4.4) in the Si phase contained in the negative electrode active material after the initial charge of the lithium ion battery. Also, it is preferable that the Si₂Ti phase contains a compound represented by a LiySi₂Ti phase (0 ≤ y ≤ 1.6).

Further, in the negative electrode active material made of a Si alloy, the volume change due to occlusion and release of Li ions during charging and discharging of the Si phase is remarkably large, thus cracks are likely to occur in the negative electrode active material layer when charging and discharging are repeated. As a result, decrease in the discharge capacity (cycle characteristic) after repeating charge and discharge has become a problem. In the present invention, by employing a polyimide resin having a three-dimensional structure subjected to an imidization reaction and an imination reaction as a negative electrode binder, deterioration of the structure of the negative electrode active material layer with repetition of charging and discharging, and the occurrence of cracks can be alleviated, and accordingly, decrease in discharge capacity can be suppressed. Polyimide can be obtained by heat treating a polyamic acid precursors at a temperature of 300°C or higher.

The polyamic acid precursors used in the present invention are tetracarboxylic acid dianhydride and diamines, with all the diamines ranging from 100 to 120, based on 100 of the tetracarboxylic acid dianhydride, in a molar ratio.

The polyimide obtained by heat treatment of the polyamic acid precursors preferably has an imidization ratio of polyimide of 95% or more. Polyimide having an imidization ratio of 95% or more can be obtained, for example, by heat treating an N-methyl-2-pyrrolidone (NMP) solution of polyamic acid precursors at a temperature of 300°C or higher for 1 hour or more under an inert atmosphere for preventing oxidation. For example, when heat treatment is performed at 300°C, the imidization ratio becomes 95% at a heat treatment time of 1 hour, and when heat treatment is performed at 350°C, the imidization ratio becomes 100% at a heat treatment time of 1 hour. In addition, for imination, heat treatment is performed for further 0.5 hours or more at a temperature of 350°C or higher after imidization.

The polyamic acid precursors used in the present invention have a molar ratio range of all the diamines from 100 to 120, based on 100 of the tetracarboxylic acid dianhydride, whereby polyimide obtained by heat treatment becomes a polyimide having a three-dimensional structure through an imidization reaction in which a polyamic acid undergoes dehydration condensation by heat treatment and an imination reaction (C=N bond) by reacting a ketone group in the polyimide resin and an amino group of excessive diamines. The polyimide binder in the present invention has a three-dimensional structure by imidization and imination, so that the mechanical strength and flexibility of the binder can be enhanced, as compared with the conventional polyimide binder comprising only of a straight chain structure. Such polyimide binder contains many imide groups in the molecule, thus can exhibit high adhesion. Since the imide group has high polarity, it has high adhesion to Si alloy negative electrode active material particles, and a metal foil as a current collector, for example, a stainless foil. Furthermore, since the three-dimensional structure has a branched structure spreading in many directions, the imide groups present in the structure also spread in many directions.

The tetracarboxylic acid dianhydride of the polyamic acid precursor used in the present invention is preferably an aromatic tetracarboxylic acid dianhydride, and further preferably pyromellitic anhydride, 3,3',4,4'-biphenyltetracarboxylic acid anhydride, or derivatives derived from two types of compounds are preferred. The diamines are preferably aliphatic diamines and aromatic diamines, and further preferably 4,4'-diaminodiphenyl ether, p-phenylene diamino, or derivatives derived from two types of compounds are preferred.

The negative electrode current collector used in the present invention is preferably a stainless steel foil or a Ni-plated steel plate. Here, when a conventional Cu foil is exposed to an environment of 300°C or higher, the mechanical strength decreases, and thus the conventional Cu foil cannot follow repeated volume changes in the negative electrode active material made of a Si alloy, and is not preferable. The stainless foil or the Ni-plated steel plate has extremely high strength even when it is thin and the strength does not decrease even under an environment of appropriately 300°C, thus can maintain its initial strength even after imidization and imination at high temperature.

There is no particular restriction on the shape of the current collector, and it is not limited to the sheet shape such as the stainless steel foil or the Ni-plated steel plate described above. For example, by the use of a three-dimensional substrate such as foamed metal, mesh, woven fabric, nonwoven fabric, expanded metal, or the like, a current collector having a three-dimensional form formed by applying a Ni plating on the three-dimensional substrate or the like may be used. When such a three-dimensional substrate is used, an electrode with high capacity density can be obtained even with a binder that lacks adhesion to a current collector. In addition, high-rate charge/discharge characteristics are improved.

In order to prepare a negative electrode, for example, a conductive assistant, a polyamide imide binder and NMP are added to the negative electrode active material made of a Si alloy described above to form a paste, and this is applied on the negative electrode current collector. The amount of the conductive assistant to be used is not particularly limited, and for example, it can be set to appropriately 2.5% or more and appropriately 10% or less by mass ratio, based on 100 of the negative electrode active material made of a Si alloy. The amount of the polyamide imide binder having a three-dimensional structure to be used is not also particularly limited, and for example, it can be set to appropriately 15% or more and appropriately 22.5% or less by mass ratio, based on 100 of the negative electrode active material made of a Si alloy.

The lithium ion battery positive electrode can be constituted by forming a positive electrode active material conventionally used in the technical field of a lithium ion battery in layers on a positive electrode current collector. As the positive electrode active material, for example, a Li-containing metal oxide can be suitably used. As the Li-containing metal oxide, at least one selected from the group consisting of layered compounds, spinel structure compounds and polyanion compounds can be used.

As the layered compound, for example, a lithium cobaltate composite oxide (LiCoO₂; hereinafter sometimes referred to as LCO), a lithium manganate composite oxide (LiMnO₂), a lithium nickelate composite oxide (LiNiO₂), a lithium niobate composite oxide (LiNbO₂), a lithium ferrite composite oxide (LiFeO₂), a lithium magnesium composite oxide (Li₂MgO₂), a lithium calcium composite oxide (Li₂CaO₂), a lithium cuprate composite oxide (LiCuO₂), a lithium zincate composite oxide (LiZnO₂), a lithium molybdate composite oxide (LiMoO₂), a lithium tantalate composite oxide (LiTaO₂), a lithium tungstate composite oxide (LiWO₂), a lithium-nickel-cobalt-aluminum composite oxide (LiNi_{0.8}Co_{0.15}Al_{0.05}O₂; hereinafter sometimes referred to as LNCAO), a lithium-nickel-cobalt-manganese composite oxide (LiNi_{1/3}CO_{1/3}Mn_{1/3}O₂; hereinafter sometimes referred to as LNCMO), a Li excess nickel-cobalt-manganese composite oxide (LiₓNi_{A}Co_{B}MnCO₂ solid solution; hereinafter sometimes referred to as Li rich NCM) and the like can be preferably exemplified.

As the spinel structure compound, for example, a spinel-type lithium manganate composite oxide (LiMn₂O₄; hereinafter sometimes referred to as LMO), a spinel-type lithium-manganese-nickel composite oxide (LiNi_{0.5}Mn_{1.5}O₄; hereinafter sometimes referred to as LNMO) and the like can be preferably exemplified.

As the polyanion compound, for example, lithium iron phosphate (LiFePO₄; hereinafter sometimes referred to as LFP), lithium manganese phosphate (LiMnPO₄), lithium cobalt phosphate (LiCoPO₄) and the like can be preferably exemplified.

In addition to the above, manganese dioxide (MnO2), a vanadium-based material, a sulfur-based material, a silicate-based material and the like are also preferably used.

Further, since the lithium ion battery using the negative electrode of the present invention needs to contain Li ions, it is preferable to use a lithium salt as an electrolyte salt. The lithium salt is not particularly limited, and specific examples thereof include lithium hexafluorophosphate, lithium perchlorate, lithium tetrafluoroborate, lithium trifluoromethanesulfonate, lithium trifluoromethanesulfonate imide. These lithium salts can be used singly or in combination of two or more kinds. The above lithium salt has high electronegativity and is easily ionized, thus, when employed as a negative electrode material, it is possible to provide a battery with excellent cycle characteristics and large charge/discharge capacity.

As the solvent of the electrolyte, for example, propylene carbonate, ethylene carbonate, dimethyl carbonate, diethyl carbonate, γ-butyrolactone can be used, and these solvents can be used singly or in combination of two or more kinds. In particular, propylene carbonate alone, a mixture of ethylene carbonate and diethyl carbonate, or γ-butyrolactone alone is preferable. The mixing ratio of the mixture of ethylene carbonate and diethyl carbonate can be arbitrarily adjusted within a range where one component is 10% or more and 90% or less in volume fraction. Further, the electrolyte of the lithium battery of the present invention may be a solid electrolyte or an ionic liquid.

A lithium ion battery adopting the structure described above can function as a battery with high capacity and excellent cycle performance. Although the structure of the lithium ion battery is not particularly limited, it can be applied to existing battery configurations and structures such as laminated batteries and wound batteries.

### EXAMPLES

Hereinafter, the present invention will be described further specifically with reference to examples, but the present invention is not limited to these examples at all.

### (Example 1)

### <Preparation of Negative Electrode>

With respect to Si alloy powder (negative electrode active material powder) obtained by mixing Si and Ti at a constituent atom ratio of Si : Ti = 90 : 10, then melting the mixture, and quenching and solidifying the molten metal to constitute a eutectic structure of a Si phase and a silicide Si₂Ti phase, polyamic acid (PAA) as a binder precursor in which tetracarboxylic acid dianhydride and diamines were in a molar ratio (= diamines/tetracarboxylic acid dianhydride) of 1.2, and acetylene black (AB) as a conductive material were weighed so as to obtain a ratio of negative electrode active material powder : PAA : conductive material = 80 : 2 : 18 (mass ratio), and dispersed in N-methylpyrrolidone (NMP), then the mixture was thoroughly stirred with a rotation/revolution mixer to form a slurry. The resulting slurry was applied on a stainless steel foil with a thickness of 10 µm as a negative electrode current collector and dried at 80°C in the atmosphere, then passed through a pair of rotating rollers to obtain an electrode sheet by a roll press machine. This electrode sheet was punched into a disk shape with a diameter of 12 mm by an electrode punching machine and subjected to heat treatment at 350°C in an Ar gas atmosphere for 1 hour and 30 minutes to obtain a negative electrode plate. Here, the thickness of the slurry applied on the stainless foil is 10 µm.

### <Preparation of Positive Electrode>

A mixture in a slurry state was prepared by mixing raw materials of lithium iron phosphate (LFP, positive electrode active material) : CMC binder : AB = 90 : 4 : 6 (mass ratio). The slurry was applied on an Al foil with a thickness of 20 µm as a positive electrode current collector and dried at 80°C, then passed through a pair of rotating rollers to obtain an electrode sheet by a roll press machine. This electrode was punched into a disk shape with a diameter of 11 mm by an electrode punching machine and heat-treated (under reduced pressure, at 150°C for 5 hours) to obtain a positive electrode plate. Here, the thickness of the slurry applied on the Al foil is 25 µm.

### <Fabrication of Battery>

As a battery outer package, a can of SUS316 was used as a 2032 type coin cell member, and PFA was used as a gasket. A 16 mm diameter glass filter (trade name "Advantec GA-100" with a thickness of 0.44 mm and a porosity of 90% were compressed to a thickness of 0.35 mm and a porosity of 88%) subjected to a reduced-pressure drying treatment at 120°C for 24 hours was used as a separator, and 1 M LiPF6 EC (ethylene carbonate) : DEC (diethyl carbonate) = 1 : 1 (volume ratio) was used as an electrolytic solution. On the lower lid of the coin cell, the positive electrode was placed with the Al foil face directed downward, a separator made of a glass filter was stacked, and the negative electrode was stacked with a face coated with the negative electrode active material layer directed downward to prepare a test battery. Assembling of the test battery was carried out in an environment having a dew point temperature of -60°C or lower.

### (Example 2)

A coin cell (CR2032) was prepared in the same conditions as in Example 1 except for using Si alloy powder obtained by mixing Si and Ti at a constituent atom ratio of Si : Ti = 80 : 20, then melting the mixture, and quenching and solidifying the molten metal to constitute a eutectic structure of a Si phase and a silicide Si₂Ti phase as the negative electrode active material.

### (Example 3)

A coin cell (CR2032) was prepared in the same conditions as in Example 1 except for using 40 µm electrolytic Cu foil as the negative electrode current collector.

### (Comparative Example 1)

A coin cell (CR2032) was prepared in the same conditions as in Example 1 except for using Si alone as the negative electrode active material.

### (Comparative Example 2)

A coin cell (CR2032) was prepared in the same conditions as in Example 1 except for using a polyamic acid (PAA) with a molar ratio of tetracarboxylic acid dianhydride and diamines (= diamines/tetracarboxylic acid dianhydride) of 0.9 as the negative electrode binder precursor.

### (Battery Performance Test)

The coin cells of Examples 1 and 2, and Comparative Examples 1, 2 and 3 were each tested up to 1500 cycles at a charge/discharge current value of 3 CA at 30°C.

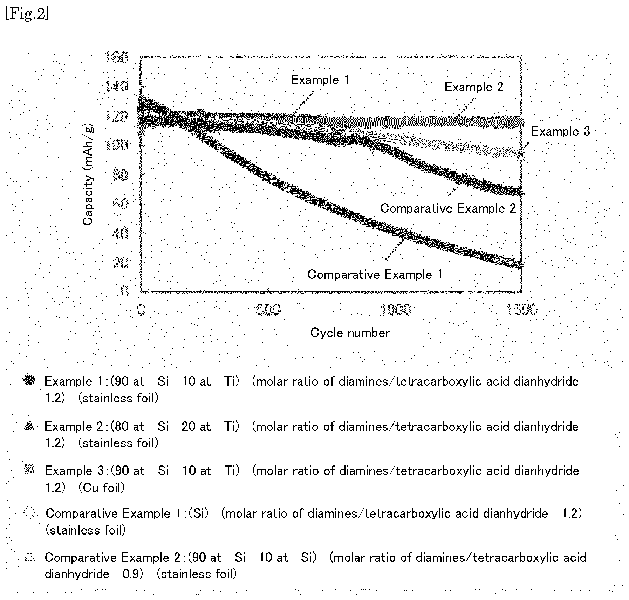

Fig. 2 is a graph showing cycle characteristics of each of the coin cells of Examples 1, 2 and 3, and Comparative Examples 1 and 2. In this graph, the vertical axis represents capacity (mAh/g), and the horizontal axis represents cycle number (times).

As can be seen from the graph of Fig. 2, in the battery of Comparative Example 1 using Si alone as the negative electrode active material, the capacity after 1500 cycles is reduced by 90% or more with respect to the initial capacity. In the negative electrode active material, a large volume change occurs when occluding and releasing Li ions, thus the pulverization of the active material progresses accompanying repetition of charging and discharging, or the active material is peeled from the current collector. Thus, it is considered that the current collecting characteristics were lowered, and the charge/discharge cycle characteristics deteriorated.

As can be also seen from the graph of Fig. 2, in the battery of Comparative Example 2 using a polyamic acid (PAA) with a molar ratio of tetracarboxylic acid dianhydride and diamines (= diamines/tetracarboxylic acid dianhydride) of 0.9 as the negative electrode binder precursor, the capacity after 1500 cycles is reduced by 40% or more with respect to the initial capacity. That is, cycle characteristics are deteriorated. It is considered that the cycle characteristics are deteriorated due to the following fact. That is, the binder was composed of only the straight chain structure material, so that the mechanical strength and flexibility decreased, and further with the addition of volume change of the Si phase accompanying charging and discharging, the structure degradation of the negative electrode active material layer progressed.

On the other hand, it can be also seen that, in lithium ion batteries shown in Examples 1 and 2 having the negative electrode active material layer containing the Si alloy having a eutectic structure composed of a Si phase and a silicide Si₂Ti phase and a polyimide binder having a three-dimensional structure by heat treatment of a polyamic acid (PAA) with a molar ratio of tetracarboxylic acid dianhydride and diamines (= diamines/tetracarboxylic acid dianhydride) of 1.2 as the negative electrode binder precursor, as can be also seen from Fig. 2, the reduction of the capacity after 1,500 cycles stayed small at appropriately 5% or less with respect to the initial capacity, the capacity attenuation with respect to the initial capacity became mild compared to the lithium ion battery in Comparative Examples 1 and 2, and deterioration of cycle characteristics is suppressed.

Also, as can be also seen from the cycle characteristics of the coin cell of Example 2 shown in Fig. 2, in the Si alloy having a eutectic structure composed of a Si phase and a silicide Si₂Ti phase, the higher the content ratio of Ti, the smaller the change in the capacity after 1500 cycles with respect to the initial capacity. Therefore, it can be seen that pulverization due to the volume change during charging and discharging of the Si alloy and the electrical isolation of the Si particles are suppressed, and good charge/discharge cycle characteristics are obtained.

In addition, as can be also seen from the graph of Fig. 2, in the battery of Example 3 using a 40 µm electrolytic Cu foil as the negative electrode current collector, the result is better than that of the coin cell of Comparative Example 1. However, the capacity after 1500 cycles is reduced by 22% with respect to the initial capacity, and the capacity attenuation becomes larger than that of the coin cells in Examples 1 and 2. That is, cycle characteristics are deteriorated. It is considered that the cycle characteristics are deteriorated due to the following fact. That, is, the mechanical strength of the Cu foil decreased by the heat treatment applied to the binder, thus the binder cannot follow the volume change accompanying charging and discharging of the Si phase which is the negative electrode active material, and the degradation of the electrode structure progressed, and it can be seen that it is preferable to form the negative electrode current collector from a material such as stainless steel or Ni-plated steel, in which the mechanical strength hardly decreases by heat treatment.

### INDUSTRIAL APPLICABILITY

According to the present invention, it is possible to provide a lithium ion battery negative electrode and a lithium ion battery using the negative electrode with high capacity and excellent cycle characteristics by suppressing peeling at the interfaces between negative electrode active materials and between the negative electrode active material and a negative electrode current collector. The lithium ion battery of the present invention is suitably used as a main power source for mobile communication devices, portable electronic devices, electric bicycles, electric motorcycles, electric vehicles, and the like.

## Claims

1. A lithium ion battery negative electrode for use in a lithium ion battery, wherein a negative electrode active material layer containing:
a negative electrode active material, which is a Si alloy composed of a eutectic structure of a Si phase and a Si2Ti phase, and
a binder having a three-dimensional structure
is formed on a negative electrode current collector,
**characterized in that** the binder is a polyimide having a three-dimensional structure comprising a C=N bond obtained by imidating tetracarboxylic acid dianhydride and diamines, with the total of the diamines ranging from 100 to 120, based on 100 of the tetracarboxylic acid dianhydride, in a molar ratio, and then iminating at a temperature of at least 350°C for at least 0.5 h.

2. The lithium ion battery negative electrode according to claim 1, wherein the Si alloy is obtained by quenching and solidifying metal raw materials of Si and Ti in a mixed and molten state, and a Si₂Ti phase or a Si phase which has been refined to a width of 1 µm or less is dispersed in a Si phase or a Si₂Ti phase which is a parent phase.

3. The lithium ion battery negative electrode according to claim 1 or 2, wherein, in the Si alloy, when a total atomic ratio of Si and Ti is 100 atomic%, an atomic fraction of Ti is 10% or more and 25% or less.

4. The lithium ion battery negative electrode according to any one of claims 1 to 3, wherein the negative electrode current collector is a stainless steel foil or a Ni-plated steel plate with a thickness of 15 µm or less.

5. A lithium ion battery comprising the lithium ion battery negative electrode according to any one of claims 1 to 4.

## Patentansprüche

1. Negative Lithium-Ionen-Batterie-Elektrode zur Verwendung in einer Lithium-Ionen-Batterie, wobei eine Schicht eines negativen aktiven Elektrodenmaterials aufweisend:
ein negatives aktives Elektrodenmaterial, welches eine Si-Legierung mit einer eutektischen Struktur aus einer Si-Phase und einer Si2Ti-Phase ist, und
ein Bindemittel mit einer dreidimensionalen Struktur,
auf einem negativen Elektrodenstrom-Kollektor gebildet ist,
**dadurch gekennzeichnet, dass** das Bindemittel ein Polyimid mit einer dreidimensionalen Struktur ist, das eine C=N-Bindung aufweist, die durch Imididisierung von Tetracarbonsäuredianhydrid und Diaminen erhalten wurde, wobei die Gesamtheit der Diamine im Mol-Verhältnis 100 bis 120 relativ zu 100 des Tetracarbonsäuredianhydrid beträgt, gefolgt von einer Iminisierung bei einer Temperatur von 350°C für mindestens 0,5 h.

2. Negative Lithium-Ionen-Batterie-Elektrode gemäß Anspruch 1, wobei die Si-Legierung erhalten wurde durch Ablöschen und Erhärten eines metallischen Rohmaterials aus Si und Ti in einem gemischten und geschmolzenen Zustand, und eine Si₂Ti-Phase oder eine Si-Phase, die zu einer Breite von 1 µm verfeinert wurde, in einer Si-Phase oder einer Si₂Ti-Phase als Mutterphase dispergiert wurde.

3. Negative Lithium-Ionen-Batterie-Elektrode gemäß Anspruch 1 oder 2, wobei in der Si-Legierung der atomare Anteil von Ti 10% oder mehr und 25% oder weniger beträgt, wenn der gesamte atomare Anteil von Si und Ti 100 Atom% beträgt.

4. Negative Lithium-Ionen-Batterie-Elektrode gemäß einem der Ansprüche 1 bis 3, wobei der negative Elektrodenstrom-Kollektor eine Folie aus rostfreiem Stahl oder ein vernickeltes Stahlblech mit einer Dicke von 15 µm oder weniger ist.

5. Lithium-Ionen-Batterie mit der negativen Lithium-Ionen-Batterie-Elektrode gemäß einem der Ansprüche 1 bis 4.

## Revendications

1. Electrode négative de batterie à ions lithium pour l'utilisation dans une batterie à ions lithium, dans laquelle une couche de matériau actif d'électrode négative comprend :
un matériau actif d'électrode négative, qui est un alliage de Si composé d'une structure eutectique d'une phase de Si et d'une phase de Si2Ti, et
un liant ayant une structure tridimensionnelle qui est formé sur un collecteur de courant d'électrode négative,
**caractérisé en ce que** le liant est un polyimide ayant une structure tridimensionnelle comprenant une liaison C=N obtenue par imidation de dianhydride d'acide tétracarboxylique et de diamines, le total des diamines étant compris entre 100 et 120, sur la base de 100 dianhydride d'acide tétracarboxylique, dans un rapport molaire, puis par imidation à une température d'au moins 350°C pendant au moins 0,5 h.

2. Electrode négative de batterie à ions lithium selon la revendication 1, dans laquelle l'alliage de Si est obtenu par désactivation et solidification de matières premières métalliques de Si et Ti à l'état mélangé et fondu, et une phase de Si2Ti ou une phase de Si qui a été affinée jusqu'à une largeur de 1 µm ou moins est dispersée dans une phase de Si ou une phase de Si2Ti qui est une phase mère.

3. Electrode négative de batterie à ions lithium selon la revendication 1 ou 2, dans laquelle, dans l'alliage de Si, lorsqu'un rapport atomique total de Si et Ti est de 100 pourcent atomique, une fraction atomique de Ti est de 10% ou plus et de 25% ou moins.

4. Electrode négative de batterie à ions lithium selon l'une quelconque des revendications 1 à 3, dans laquelle le collecteur de courant d'électrode négative est une feuille d'acier inoxydable ou une plaque d'acier plaquée de Ni d'une épaisseur de 15 µm ou moins.

5. Batterie à ions lithium comprenant l'électrode négative de batterie à ions lithium selon l'une quelconque des revendications 1 à 4.
